(19) Europäisches Patentamt
European Patent Office
Office européen des brevets

(11) **EP 4 559 725 A1**

(12) **EUROPEAN PATENT APPLICATION**
published in accordance with Art. 153(4) EPC

(43) Date of publication:
**28.05.2025 Bulletin 2025/22**

(21) Application number: **23934896.4**

(22) Date of filing: **25.09.2023**

(51) International Patent Classification (IPC):
**B60L 7/10** (2006.01)   **B60L 15/20** (2006.01)
**B60T 7/12** (2006.01)

(52) Cooperative Patent Classification (CPC):
Y02T 10/72

(86) International application number:
**PCT/CN2023/120974**

(87) International publication number:
**WO 2024/221727 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.04.2023 CN 202310455820**

(71) Applicant: **Deepal Automobile Technology Co., Ltd.**
**Chongqing 401133 (CN)**

(72) Inventors:
• **QIAO, Shuaipeng**
**Chongqing 401135 (CN)**

• **HUANG, Liang**
**Chongqing 401135 (CN)**
• **YANG, Guanlong**
**Chongqing 401135 (CN)**
• **ZHU, Yutao**
**Chongqing 401135 (CN)**
• **YAN, Qinshan**
**Chongqing 401135 (CN)**

(74) Representative: **2K Patentanwälte Blasberg Kewitz & Reichel**
**Partnerschaft mbB**
**Schumannstrasse 27**
**60325 Frankfurt am Main (DE)**

(54) **DYNAMIC BRAKE FUNCTION TORQUE CONTROL METHOD AND SYSTEM, AND ELECTRIC VEHICLE AND STORAGE MEDIUM**

(57)    A dynamic brake function (DBF) torque control method, comprising: after it is monitored that a DBF of a vehicle is triggered, performing arbitration on an initially required torque of the vehicle to obtain an initially required torque T3 of the vehicle; acquiring a vehicle impact degree of the vehicle, and calculating a vehicle torque variation ΔT on the basis of the vehicle impact degree of the vehicle; acquiring a hysteresis time t1 for controlled deceleration for parking brake (CDP) of the vehicle to take effect and a hysteresis time t2 for a rear wheel unlocker (RWU) to take effect; monitoring the state of the CDP, and if the CDP is activated, processing T3 according to ΔT and t1; if the CDP is not activated but the RWU is activated, processing T3 according to the ΔT and t2; and if neither the CDP nor the RWU is activated, processing T3 on the basis of a vehicle speed V of the vehicle. Further disclosed are a DBF torque control system, and an electric vehicle and a storage medium. A torque output is adjusted by means of controlling a requirement-end torque during a DBF process, thereby achieving the aim of improving the DBF driving performance and improving the safety of a braking process, and the problem of the control over a vehicle body posture being insufficient that is caused by unsmooth braking during the DBF process is solved.

EP 4 559 725 A1

Monitor a triggering state of a dynamic braking function DBF of a vehicle, and perform vehicle initial required torque arbitration after the DBF is triggered, to obtain a vehicle initial required torque T3

Obtain and calculate a vehicle torque change amount ΔT based on a vehicle impact degree of the vehicle

Obtain a hysteresis time t1 for controller deceleration parking CDP of the vehicle to take effect and a hysteresis time t2 for a rear wheel unlocker RWU to take effect

Monitor a state of the CDP, and if the CDP is activated, process the vehicle initial required torque T3 based on the vehicle torque change amount and the hysteresis time t1 for the CDP to take effect

Process the vehicle initial required torque T3 based on the vehicle torque change amount and the hysteresis time t2 for the RWU to take effect, if the CDP is not activated but the RWU is activated

Process the vehicle initial required torque T3 based on a vehicle speed V of the vehicle if neither the CDP nor the RWU is activated

FIG. 1

**Description**

TECHNICAL FIELD

The present invention relates to the field of electric vehicle technologies, and in particular, to a dynamic baker function torque control method and system, and electric vehicle and storage medium.

BACKGROUND

An electric vehicle has advantages such as a simple structure, being green and environmental, and a quick dynamic response, has become a development target of various auto manufacturers, and a market share continuously rises. Based on an advantage of a voltage platform of the electric vehicle, an electronic parking braking system (EPB) gradually replaces a conventional lever parking brake due to advantages such as a simple structure and easy assembly of the EPB system. When the braking system is faulty or has an emergency (for example, a driver cannot operate a pedal), an EPB switch may be continuously pulled up to assist in braking the vehicle, to implement emergency parking of the vehicle.

For a vehicle model provided with a dynamic braking function (DBF), after the DBF function is triggered, a controller deceleration parking (CDP) function of an electronic stability program (ESP) decelerates a vehicle; when the CDP function fails, a rear wheel unlocker (RWU) function of the electronic parking braking system (EPB) decelerates the vehicle; and after the DBF decelerates the vehicle to a value less than a specific value, a controller controls the vehicle to park and shift a gear.

A slip energy recovery function and a creep function have become relatively common configurations in new energy vehicles such as pure electric vehicles, range extended electric vehicles, plug-in hybrid electric vehicles, and fuel cell electric vehicles. In a driving process, if a braking system of a vehicle becomes faulty suddenly when a slip recovery torque or a creep required torque is relatively large, a DBF function is triggered by using an EPB, and affected by a current required torque, the vehicle may change from driving to an emergency brake or change from a slow brake to an emergency brake, causing a sudden torque change. Consequently, driving performance and safety of the vehicle are affected. Therefore, in a process in which the EPB assists in dynamic parking, a vehicle slip recovery torque and a creep torque need to be controlled.

Publication number CN111645683A, entitled "METHOD AND SYSTEM FOR REQUESTING, BY ACC SYSTEM, ESC TO PERFORM DYNAMIC PARKING, VEHICLE, AND STORAGE MEDIUM" includes: in a specified scenario, after a CDD function is faulty, the ACC implements dynamic parking request timing and switching timing between functions through CDP or an RWU. However, a driving performance processing problem of CDP and the RWU in a function response process are not considered in this solution.

Publication number CN114802169A entitled "METHOD AND SYSTEM FOR CONTROLLING EPB IMPLEMENTING EQUIVALENT PARKING FUNCTION" discloses a technical solution: when a vehicle speed is higher than a specific value, an EPB parking control system performs dynamic parking and feeds back a braking state to a motor controller, and the motor controller outputs a reset instruction to control a motor torque to be reset. In this solution, after dynamic parking is triggered, the motor controller directly controls the motor torque to be reset to zero, without considering lurching and driving performance problems caused by vehicle inertia in a response process of a brake actuation mechanism.

In conclusion, in a control method in which an EPB assists in dynamic parking, the following to-be-resolved problems exist:

1. CDP is to implement deceleration by using a hydraulic system. In a pressure build-up process of the hydraulic system, if a slip recovery torque exits relatively quickly, a vehicle lurches due to inertia, and a higher vehicle speed and heavier vehicle mass lead to a larger lurching distance, causing a potential safety hazard, and also deteriorating passenger comfort. If a creep torque exits relatively quickly, a secondary nose dive of a vehicle may be caused, affecting the passenger comfort.

2. An RWU is to drive a caliper by using a motor. When the caliper starts clamping, it is expected to reset a vehicle requirement end torque to zero, to better control a vehicle body posture and brake the vehicle emergently. However, the RWU also has a time delay from a moment at which the RWU is activated to a moment at which the caliper starts clamping. During the time delay, the requirement end torque also affects safety and driving performance of the vehicle.

SUMMARY

In view of the foregoing disadvantages of the conventional technology, the present invention provides a dynamic parking torque control method and system, an electric vehicle, and a storage medium, so that a requirement end torque in a dynamic parking process is controlled to adjust a torque output of a powertrain, so as to improve dynamic parking driving performance, improve safety in a braking process, and resolve a problem that a vehicle body posture is not controlled enough due to unsmooth braking in the dynamic parking process.

To implement the foregoing objectives, the present invention provides a dynamic parking torque control method in which safety and driving performance are considered. In the control method, inputs are 20 parameters such as a slip recovery function enable flag bit, a slip recovery required torque, a creep function enable flag bit, a creep required torque, a DBF activation flag bit, a CDP function activation flag bit, a CDP availability state, power cylinder brake pressure, a power cylinder pressure build-up hysteresis time, an RWU brake activation flag bit, an RWU availability state, an EPB caliper state, an RWU function hysteresis time, a vehicle rotating mass conversion factor, vehicle mass, a wheel rolling radius, a powertrain system speed ratio, powertrain system transmission efficiency, a vehicle impact degree, and a vehicle speed, and an output is a vehicle required torque obtained after processing.

The present invention provides a dynamic parking torque control method, including:

monitoring a triggering state of a dynamic braking function DBF of a vehicle, and performing vehicle initial required torque arbitration after the DBF is triggered, to obtain a vehicle initial required torque T3;

obtaining and calculating a vehicle torque change amount $\Delta T$ based on a vehicle impact degree of the vehicle;

obtaining a hysteresis time t1 for controller deceleration parking CDP of the vehicle to take effect and a hysteresis time t2 for a rear wheel unlocker RWU to take effect; and

monitoring a state of the CDP, and if the CDP is activated, processing the vehicle initial required torque T3 based on the vehicle torque change amount $\Delta T$ and the hysteresis time t1 for the CDP to take effect; or

processing the vehicle initial required torque T3 based on the vehicle torque change amount $\Delta T$ and the hysteresis time t2 for the RWU to take effect, if the CDP is not activated but the RWU is activated; or

processing the vehicle initial required torque T3 based on a vehicle speed V of the vehicle if neither the CDP nor the RWU is activated.

In an embodiment of the present invention, the step of monitoring a triggering state of a dynamic braking function DBF of a vehicle, and performing vehicle initial required torque arbitration after the DBF is triggered, to obtain a vehicle initial required torque T3 includes:

receiving and processing only a signal of a slip recovery torque T1 and a signal of a creep torque T2 of the vehicle after the DBF is triggered;

defining that the slip recovery torque T1 and a braking torque of the vehicle have negative values, enabling T1=T1 when T1<0, enabling T1=-T1 when T1>0, and enabling the slip recovery torque T1=0 when a slip recovery function of the vehicle is not enabled;

defining that the creep torque has a positive value, enabling T2=|T2|, and enabling the creep torque T2=0 when the creep function is disabled; and

determining the vehicle initial required torque T3 based on the slip recovery torque T1 and the creep torque T2, and enabling T3=T1+T2 and $0 \leq |T3| \leq \max(|T1|\max, T2\max)$.

In an embodiment of the present invention, after the step of determining the vehicle initial required torque T3 based on the slip recovery torque T1 and the creep torque T2, and enabling T3=T1+T2 and $0 \leq |T3| \leq \max(|T1|\max, T2\max)$, the method further includes:

comparing an absolute value of the vehicle initial required torque T3 with a motor output torque limit T4 of the vehicle, and enabling T3=min(|T3|, T4).

In an embodiment of the present invention, the motor output torque limit includes a motor maximum drive torque limit and a motor maximum recovery torque limit.

In an embodiment of the present invention, in the step of obtaining and calculating a vehicle torque change amount $\Delta T$ based on a vehicle impact degree of the vehicle, a calculation formula of the vehicle torque change amount $\Delta T$ is as follows:

$$\Delta T = \frac{\delta \cdot m \cdot r}{i \cdot \eta} \cdot |j| \cdot \Delta t \; .$$

Herein, $\delta$ is a rotating mass conversion factor of the vehicle; m is vehicle mass in a unit of kg; r is a wheel rolling radius in a unit of m; i is a powertrain system speed ratio; $\eta$ is powertrain system transmission efficiency; j is the vehicle impact degree in a unit of m/s$^3$; $\Delta t$ is a time interval in a unit of s; and $\Delta T$ is a corresponding vehicle torque change amount within a time of $\Delta t$ when the vehicle impact degree is j.

In an embodiment of the present invention, the vehicle impact degree j may be represented as follows:

$$J = \frac{d\alpha}{dt} = \frac{d^2 v}{dt^2} \; .$$

Herein, $\dfrac{d\alpha}{dt}$ is a first-order derivative of acceleration of the vehicle, and $\dfrac{d^2 v}{dt^2}$ is a second-order derivative of a longitudinal velocity of the vehicle.

In an embodiment of the present invention, the step of obtaining a hysteresis time t1 for controller deceleration parking CDP of the vehicle to take effect and a hysteresis time t2 for a rear wheel unlocker RWU to take effect includes:

determining, based on a field test of the vehicle, the hysteresis time t1 for the CDP to take effect and the hysteresis time t2 for the RWU to take effect, specifically including:

recording a time from a moment at which the DBF is triggered to a moment at which power cylinder brake pressure P of the CDP reaches a pressure value P1 corresponding to a braking objective, and denoting the time as the hysteresis time t1; and

recording a time from a moment at which the DBF is triggered to a moment at which an electronic parking braking system EPB of the vehicle feeds back that a caliper of the vehicle starts clamping, and denoting the time as the hysteresis time t2.

In an embodiment of the present invention, the step of determining, based on a field test, the hysteresis time t1 for the CDP to take effect and the hysteresis time t2 for the RWU to take effect further includes:

separately recording hysteresis times t1' for the CDP to take effect and hysteresis times t2' for the RWU to take effect that respectively correspond to four vehicle speeds of the vehicle at 120 km/h, 90 km/h, 60 km/h, and 30 km/h; and

obtaining an average value of the hysteresis times t1' and the hysteresis times t2' that respectively correspond to the four vehicle speeds, to obtain the hysteresis time t1 for the CDP to take effect and the hysteresis time t2 for the RWU to take effect.

In an embodiment of the present invention, the step of monitoring a state of the CDP, and if the CDP is activated, processing the vehicle initial required torque T3 based on the vehicle torque change amount $\Delta T$ and the hysteresis time t1 for the CDP to take effect includes:

activating the CDP braking function when the DBF is triggered and the CDP is activated;

determining a first vehicle torque change amount

$$\Delta T1 = \frac{t1}{1000} \times \Delta T$$

based on the hysteresis time t1 and the vehicle torque change amount $\Delta T$;

when the DBF is triggered, determining that the vehicle initial required torque is T3, and determining a magnitude relationship between |T3| and $\Delta T1$; and

if $|T3| \le \Delta T1$, enabling a vehicle required torque of the vehicle=T3=0; and

if $|T3| > \Delta T1$, monitoring the power cylinder brake pressure P; enabling $|T3|=|T3|-\Delta T2$ when P<P1; and enabling the vehicle required torque=T3=0 when it is detected that P≥P1 or $|T3|<N1\times\Delta T1$, where $\Delta T2$ is an exit gradient of |T3|, N1 is an anti-jump coefficient of |T3|, and 0.5≤N1≤0.8.

In an embodiment of the present invention, the exit gradient $\Delta T2$ of |T3| may be represented as follows:

$$\Delta T2 = \frac{|T3|max}{t1} \times 1000.$$

Herein, |T3|max = max(|T1|max, T2max), and t1 is a hysteresis time for the CDP to take effect.

In an embodiment of the present invention, the step of processing the vehicle initial required torque T3 based on the vehicle torque change amount $\Delta T$ and the hysteresis time t2 for the RWU to take effect, if the CDP is not activated but the RWU is activated includes:

activating the RWU braking function when the DBF is triggered and the CDP is not activated but the RWU is activated; and

enabling $|T3|=|T3|- \Delta T3$ within the hysteresis time t2 of the RWU braking function, and when the time t2 expires, enabling $|T3|=0$ if $|T3|>0$, where $\Delta T3$ is an exit gradient of |T3|.

In an embodiment of the present invention, the exit gradient $\Delta T3$ of |T3| may be represented as follows:

$$\Delta T3 = \frac{N2 \times |T3|max}{t2} \times 1000.$$

Herein, N2 is a factor of safety of |T3|, 1.1≤N2≤1.3, |T3|max = max(|T1|max, T2max), and t2 is the hysteresis time for the RWU to take effect.

In an embodiment of the present invention, the step of processing the vehicle initial required torque T3 based on a vehicle speed V of the vehicle if neither the CDP nor the RWU is activated includes:

when the DBF is triggered and neither the CDP nor the RWU is activated, activating a pure electric braking module of the vehicle, and obtaining a current vehicle speed V of the vehicle; and

$$\text{enabling } T3=-|T3|max$$

when V≥V1; or

$$\text{enabling } T3=V\times A+B$$

when V2≤V≤V1, where A and B are calibratable constants; or

$$\text{enabling } T3=0$$

when V≤V2, where
V1 and V2 are calibratable speed values, and V1>V2.

The present invention further provides a dynamic parking torque control system. The control system performs the foregoing dynamic parking torque control method, the control system includes a CDP braking module, an RWU braking module, and a pure electric braking module, and when it is detected that the dynamic braking function DBF is triggered, an availability state of the CDP braking module and an availability state of the RWU braking module are sequentially read, and when the CDP braking module or the RWU braking module is available, the CDP braking module or the RWU braking module is activated to enter a CDP braking state or an RWU braking state, or when both the CDP braking module and the RWU braking module are unavailable, the pure electric braking module is activated to enter a pure electric braking state.

The present invention further provides an electric vehicle, including the dynamic parking torque control system, an electronic parking braking system EPB, an electronic stability program ESP, and a vehicle control unit VCU. The VCU reads a signal of a slip recovery torque and a signal of a creep torque of the electric vehicle, to perform vehicle initial required torque arbitration to obtain the vehicle initial required torque, and the VCU monitors a triggering state of a dynamic braking function DBF of the EPB, and activates controller deceleration parking CDP of the ESP or rear wheel unlocker RWU of the EPB, so that the CDP or the RWU controls a vehicle required torque of the electric vehicle based on the vehicle initial required torque by using the dynamic parking torque control system.

In an embodiment of the present invention, the electric vehicle further includes a pure electric braking module, and when both the CDP and the RWU are unavailable, the pure electric braking module is activated, and the vehicle required torque is controlled based on a vehicle speed of the electric vehicle by using the dynamic parking torque control system.

The present invention further provides a computer-readable storage medium. The computer-readable storage medium stores computer-readable instructions, and when the computer-readable instructions are executed by a processor of a computer, the computer is enabled to perform the foregoing dynamic parking torque control method.

The dynamic parking torque control method provided in the present invention may be divided into six parts: 1. vehicle initial required torque arbitration; 2. calculation of a vehicle torque change amount based on a vehicle impact degree; 3. measurement of a hysteresis time for a CDP function to take effect and a hysteresis time for an RWU function to take effect; 4. processing of a vehicle required torque during CDP braking; 5. processing of the vehicle required torque during RWU braking; and 6. processing of the vehicle required torque when both CDP and an RWU are unavailable.

[1]Vehicle initial required torque arbitration:

1. To ensure an emergency braking effect, after the DBF is triggered, in this control method, a driver drive required torque obtained by parsing a vehicle accelerator pedal signal is no longer received, and only a signal of a slip recovery torque and a signal of a creep torque that are input by a vehicle are processed.

2. Processing of the slip recovery torque: in this control method, it is defined that a recovery torque and a braking torque of the vehicle are negative values. When a slip recovery function is enabled(on), whether a received slip recovery torque T1 has a sign needs to be determined. If T1 has no sign, negative processing needs to be carry out to obtain a negative number. When the slip recovery function is disabled(off), T1=0.

3. Process of the creep torque: in this control method, it is defined that the creep torque is a positive value. When a creep function is enabled, an absolute value of a received creep torque T2 needs to be obtained. If the creep function is disabled, T2=0.

4. Requirement end torque arbitration: the slip recovery torque T1 and the creep torque T2 are added to obtain a vehicle initial required torque T3. To prevent a torque overflow, a range of the vehicle initial required torque is limited, so that |T3| does not exceed Tmax determined based on a maximum slip recovery capability and a maximum creep capability. A minimum value of |T3| is 0.

[2] Calculation of the vehicle torque change amount $\Delta T$ based on the vehicle impact degree:

$$\Delta T = \frac{\delta \cdot m \cdot r}{i \cdot \eta} \cdot \left| j \right| \cdot \Delta t \,.$$

Herein, $\delta$ is a rotating mass conversion factor of the vehicle; m is vehicle mass in a unit of kg; r is a wheel rolling radius in a unit of m; i is a powertrain system speed ratio; $\eta$ is powertrain system transmission efficiency; j is the vehicle impact degree in a unit of $m/s^3$; $\Delta t$ is a time interval in a unit of s; and $\Delta T$ is a corresponding vehicle torque change amount within a time of $\Delta t$ when the vehicle impact degree is j.

[3] Measurement of the hysteresis time for the CDP function to take effect and the hysteresis time for the RWU function to take effect: a measurement process is performed when both the CDP function and the RWU function are available. A measurement result is used for a subsequent control method.

1. Measurement of a power cylinder pressure build-up hysteresis time in a case of the CDP function: Times of CDP from a moment at which the DBF is triggered to a moment at which power cylinder brake pressure P is not less than a preset value P1 at vehicle speeds of 120 km/h, 90 km/h, 60 km/h, and 30 km/h are separately recorded through a field test, or the like, and an average value of the four times is obtained, to obtain a CDP pressure build-up hysteresis time t1 in a unit of ms.

2. Measurement of a hysteresis time in a case of the RWU function: The CDP function is shielded through calibration, or the like, hysteresis times of the RWU from a moment at which the DBF is triggered to a moment at which an EPB feeds back that a caliper starts clamping at vehicle speeds of 120 km/h, 90 km/h, 60 km/h, and 30 km/h are separately recorded, and an average value of the four times is obtained, to obtain RWU function hysteresis time t2 in a unit of ms.

[4] Processing of the vehicle required torque during CDP braking:

1. When it is detected that the DBF is triggered, a CDP availability state is "available", and a CDP braking function is activated, a CDP braking module is entered.

2. Within the CDP pressure build-up hysteresis time t1, when the vehicle impact degree is j, a first vehicle torque change amount

$$\Delta T1 = \frac{t1}{1000} \times \Delta T$$.

3. When the DBF function is triggered, the vehicle initial required torque is T3, and |T3| is compared with $\Delta T1$.

4. If |T3| is not greater than $\Delta T1$, the vehicle required torque is directly reset to zero.

5. If |T3| is greater than $\Delta T1$, the power cylinder brake pressure P is monitored. When P is less than a preset value P1, |T3| is enabled to exit based on a preset gradient $\Delta T2$. In a process in which CDP acts, when it is detected that P is not less than P1 or |T3| is less than $N1 \times \Delta T1$ ($N1 \leq 0.8$, to prevent a jump), superposition of the vehicle initial required torque T3 is terminated, and the vehicle required torque is reset to zero.

6. $\Delta T2$ determining method: $\Delta T2$ is determined based on Tmax determined based on the maximum slip recovery capability and the maximum creep capability and the power cylinder pressure build-up hysteresis time t1 (which may be calibrated).

[5] Processing of the vehicle required torque during RWU braking:

1. When it is detected that the DBF is triggered, a CDP availability state is "unavailable", an RWU availability state is "available", and an RWU braking function is activated, an RWU braking module is entered.

2. Within the hysteresis time t2 for the RWU function to take effect, the vehicle initial required torque |T3| exits based on a gradient $\Delta T3$. If |T3| is still greater than 0 after the time t2 expires, |T3| is reset to zero and output as the vehicle required torque.

3. $\Delta T3$ determining method: $\Delta T3$ is determined based on Tmax determined based on the maximum slip recovery capability and the maximum creep capability, the caliper action hysteresis time t2, and a factor of safety N2 ($1.1 \leq N2 \leq 1.5$) (which may be calibrated).

[6] Processing of the vehicle required torque when both CDP and the RWU are unavailable:
When it is detected that the DBF is triggered, the CDP availability state is "unavailable", the RWU availability state is "unavailable", and a pure electric braking module is entered. In this case, a value of the vehicle required torque is related to a vehicle speed V. When V is higher than V1, the vehicle maintains a value of the maximum slip recovery capability. That is, T3=-Tmax. When the vehicle is decelerated to a value less than V1 and greater than V2, T3 and the vehicle speed have a linear relationship (which may be calibrated). When the vehicle speed is reduced to a value less than V2, T3 is reset, to implement parking.

Beneficial effects of the present invention are as follows:
According to the dynamic parking torque control method in the present invention, a requirement end torque is controlled in a dynamic parking process to adjust a torque output of a powertrain, so as to improve dynamic parking driving performance and improve safety in a braking process. In addition, different torque control policies are separately used based on whether a controller deceleration parking CDP function of an electronic stability program ESP of a vehicle and a rear wheel unlocker RWU function of an electronic parking braking system EPB of the vehicle are available, to improve driving performance and safety in the dynamic parking process.

BRIEF DESCRIPTION OF DRAWINGS

FIG. 1 is a flowchart of a dynamic parking torque control method according to the present invention;
FIG. 2 is a schematic diagram of processing of a slip recovery torque;
FIG. 3 is a schematic diagram of processing of a creep torque;

FIG. 4 is a schematic diagram of vehicle required torque arbitration after a dynamic braking function DBF is triggered;

FIG. 5 is a schematic diagram of a relationship between a vehicle required torque and a vehicle speed when both controller deceleration parking CDP and a rear wheel unlocker RWU fail;

FIG. 6 is a logical flowchart in which an electronic parking braking system EPB performs dynamic parking control according to an embodiment of the present invention;

FIG. 7 is an architectural diagram of a dynamic parking torque control system according to the present invention; and

FIG. 8 is an architectural diagram of an electric vehicle according to the present invention.

## DESCRIPTION OF EMBODIMENTS

The following describes implementations of the present invention with reference to accompanying drawings and preferred embodiments. A person skilled in the art can easily understand other advantages and effects of the present invention based on content disclosed in this specification. The present invention may be further implemented or applied by using other different specific implementations. Various details in this specification may also be modified or altered based on different viewpoints and applications without departing from the present invention. It should be understood that the preferred embodiments are merely intended to describe the present invention, and are not intended to limit the protection scope of the present invention.

It should be noted that the figures provided in the following embodiments merely schematically describe the basic concept of the present invention. Therefore, the figures display only components related to the present invention instead of being drawn based on a quantity, shapes, and sizes of components in actual implementation. Forms, the quantity, and a ratio of the components in actual implementation of the figures may be randomly changed, and a component layout form of the figures may also be more complex.

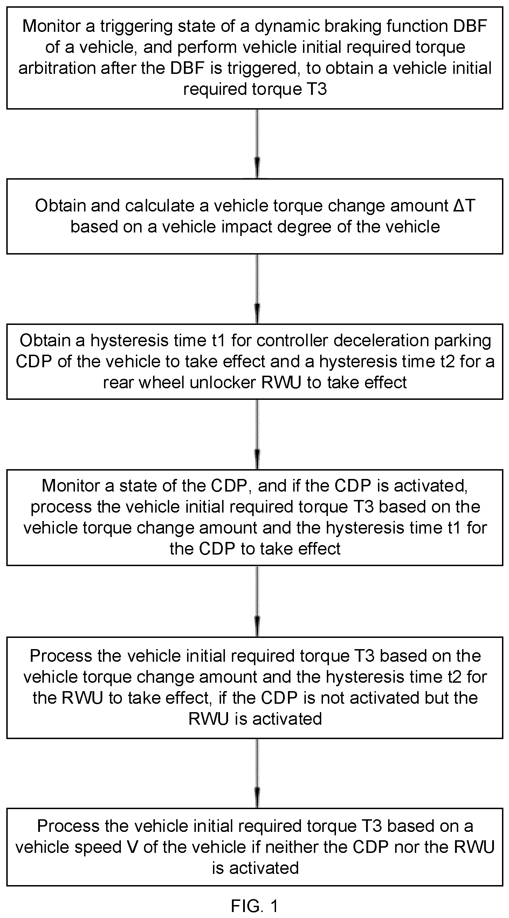

The flowcharts and block diagrams in FIG. 1 to FIG. 8 in the accompanying drawings show system architectures, functions, and operations that may be implemented by systems, methods, and computer program products according to various embodiments of the present invention. Each block in the flowcharts or block diagrams may represent a module, a program segment, or a part of code, and the module, the program segment, or the part of code includes one or more executable instructions for implementing a specified logical function. It should also be noted that, in some alternative implementations, a function marked in the block may also occur in a sequence different from that marked in the accompanying drawings.

As shown in FIG. 1, the present invention provides a dynamic parking torque control method, including:

monitoring a triggering state of a dynamic braking function DBF of a vehicle, and performing vehicle initial required torque arbitration after the DBF is triggered, to obtain a vehicle initial required torque T3;

obtaining and calculating a vehicle torque change amount $\Delta T$ based on a vehicle impact degree of the vehicle;

obtaining a hysteresis time t1 for controller deceleration parking CDP of the vehicle to take effect and a hysteresis time t2 for a rear wheel unlocker RWU to take effect; and

monitoring a state of the CDP, and if the CDP is activated, processing the vehicle initial required torque T3 based on the vehicle torque change amount $\Delta T$ and the hysteresis time t1 for the CDP to take effect; or

processing the vehicle initial required torque T3 based on the vehicle torque change amount $\Delta T$ and the hysteresis time t2 for the RWU to take effect, if the CDP is not activated but the RWU is activated; or

processing the vehicle initial required torque T3 based on a vehicle speed V of the vehicle if neither the CDP nor the RWU is activated.

In this embodiment, when a driver cannot brake the vehicle by using a brake pedal, the driver performs dynamic parking by using an electronic parking braking system of the vehicle, for example, operating an EPB button. In this case, a vehicle control unit VCU receives a dynamic parking instruction, reads a slip recovery torque and a creep torque of the vehicle, uses the slip recovery torque and the creep torque as a vehicle slip recovery torque T1 and a vehicle requested creep torque T2 for processing, and performs torque arbitration on T1 and T2, to obtain the initial required torque T3 of the vehicle. In addition, the vehicle control unit reads a current speed of the vehicle, calculates a vehicle impact degree parameter based on the current speed, continues to calculate the vehicle torque change amount $\Delta T$ based on the vehicle impact degree and a vehicle attribute, and processes the vehicle initial required torque by separately using different policies based on the hysteresis time t1 for a controller deceleration parking CDP function of an electronic stability program ESP of the vehicle to take effect and the hysteresis time t2 for a rear wheel unlocker RWU function of an electronic parking braking system EPB to take effect, to implement dynamic parking torque control of the vehicle.

When a deceleration function of the electronic stability program of the vehicle and the rear wheel unlocker function of the rear wheel are unavailable and consequently, a braking objective cannot be achieved, a slip recovery torque of a slip recovery function of the vehicle is directly used as the vehicle initial required torque for processing, and a value of the slip recovery torque is correspondingly adjusted based on a parameter value of the current vehicle speed V, to implement dynamic parking torque control of the vehicle.

It should be noted that the slip recovery torque of the vehicle is usually determined by an energy recovery mode of the vehicle. For example, a slip recovery torque of the vehicle in a strong energy recovery mode is greater than that in a weak energy recovery mode. Similarly, after the dynamic parking instruction is monitored, it may be calibrated that the slip recovery torque of the vehicle in the strong energy recovery mode is directly used as the vehicle initial required torque for processing.

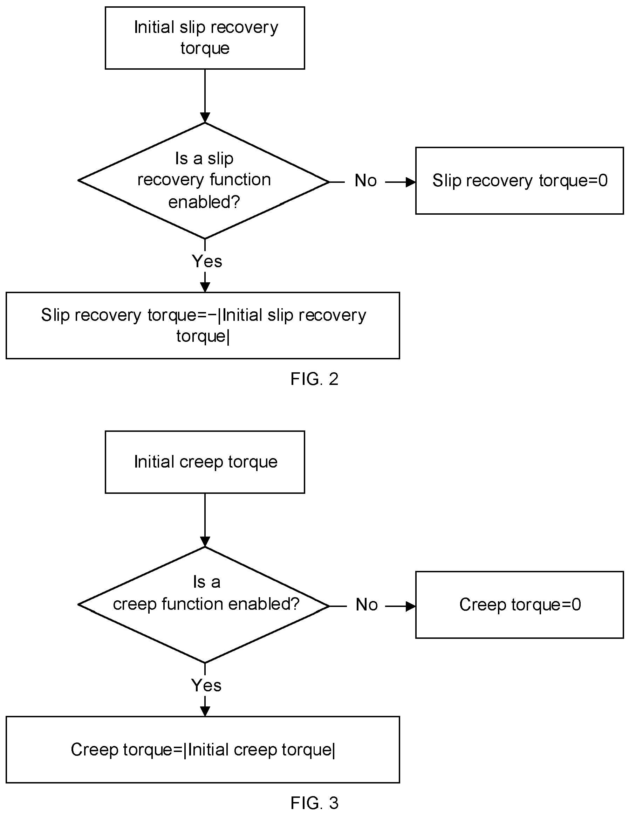

As shown in FIG. 2 to FIG. 4, in an embodiment, the step of monitoring a triggering state of a dynamic braking function DBF of a vehicle, and performing vehicle initial required torque arbitration after the DBF is triggered, to obtain a vehicle initial required torque T3 includes:

receiving and processing only a signal of a slip recovery torque T1 and a signal of a creep torque T2 of the vehicle after the DBF is triggered;
defining that the slip recovery torque T1 and a braking torque of the vehicle have negative values, enabling T1=T1 when T1<0, enabling T1=-T1 when T1>0, and enabling the slip recovery torque T1=0 when a slip recovery function of the vehicle is not enabled;
defining that the creep torque has a positive value, enabling T2=|T2|, and enabling the creep torque T2=0 when the creep function is disabled;
determining the vehicle initial required torque T3 based on the slip recovery torque T1 and the creep torque T2, and enabling T3=T1+T2 and 0≤|T3|≤max(|T1|max, T2max); and
comparing an absolute value of the vehicle initial required torque T3 with a motor output torque limit T4 of the vehicle, and enabling T3=min(|T3|, T4), where the motor output torque limit includes a motor maximum drive torque limit and a motor maximum recovery torque limit.

In this embodiment, the vehicle initial required torque arbitration is that the vehicle control unit determines, calculates, and limits a magnitude and a positive/negative sign of an input signal, for example, the slip recovery torque and the creep torque of the vehicle, and then outputs the signal as the vehicle initial required torque. The vehicle initial required torque arbitration specifically includes: First, signs of the received slip recovery torque and the received creep torque are first determined and processed. Then, the slip recovery torque and the creep torque are summed with signs, to determine the vehicle initial required torque. Finally, an absolute value of the vehicle initial required torque obtained through summation is compared with a boundary value determined based on a motor capability, and a smaller value in the absolute value and the boundary value is output.

It should be noted that "+" in the signs of the torques corresponds to driving, for example, drive gear driving and reverse gear driving (for example, acceleration and creeping), and a required torque is a positive value; and "-" corresponds to recovery and braking, drive gear slip recovery and braking and reverse gear slip recovery and braking, and a required torque is a negative value. A maximum value of the vehicle initial required torque T3 is a maximum value in an absolute value of a maximum slip recovery torque and a maximum creep torque. A motor maximum drive torque limit included in the motor output torque limit T4 is a corresponding maximum positive torque that can be provided, and the motor maximum recovery torque limit is a corresponding maximum negative torque that can be provided. Therefore, an achievable parameter range of the vehicle initial required torque is determined, and a calculated value is compared with the motor output torque limit, to obtain a minimum value, so as to perform torque control in a torque range that can be provided by the vehicle.

In an embodiment, in the step of obtaining and calculating a vehicle torque change amount ΔT based on a vehicle impact degree of the vehicle, a calculation formula of the vehicle torque change amount ΔT is as follows:

$$\Delta T = \frac{\delta \cdot m \cdot r}{i \cdot \eta} \cdot |j| \cdot \Delta t .$$

Herein, $\delta$ is a rotating mass conversion factor of the vehicle; m is vehicle mass in a unit of kg; r is a wheel rolling radius in a unit of m; i is a powertrain system speed ratio; $\eta$ is powertrain system transmission efficiency; j is the vehicle impact degree in a unit of m/s$^3$; $\Delta t$ is a time interval in a unit of s; and $\Delta T$ is a corresponding vehicle torque change amount within a time of $\Delta t$ when the vehicle impact degree is j.

Similarly, the vehicle impact degree j may be represented as follows:

$$J = \frac{d\alpha}{dt} = \frac{d^2v}{dt^2} .$$

Herein, $\frac{d\alpha}{dt}$ is a first-order derivative of acceleration of the vehicle, and $\frac{d^2v}{dt^2}$ is a second-order derivative of a longitudinal velocity of the vehicle.

In this embodiment, dynamic parking torque control is performed based on the vehicle torque change amount The vehicle impact degree is defined as "acceleration change rate", and is derivative of vehicle acceleration. It is generally considered in the industry that when J is less than 10 m/s$^3$, a longitudinal state change of the vehicle does not significantly affect passenger comfort. Therefore, the vehicle torque change amount is related to the vehicle impact degree j.

A value of the acceleration of the vehicle is determined by an output torque obtained after an output torque of each power source is coupled by a power coupling mechanism. Therefore, the acceleration change rate, namely, the impact degree can directly reflect a fluctuation of the output torque. A larger fluctuation of the output torque indicates a larger impact degree. Quantitative indexes of the impact degree are different in different countries. A recommended value of the impact degree in Germany is |J|≤10 m/s$^3$, and the recommended value of the impact degree in China is |J|≤17.64 m/s$^3$. Therefore, in this embodiment, the impact degree J is used as an evaluation indicator of the vehicle torque change amount Similarly, to reduce a torque fluctuation, |J|=10 m/s$^3$ is selected as a calibrated value to participate in calculation of the vehicle torque change amount.

In an embodiment, the step of obtaining a hysteresis time t1 for controller deceleration parking CDP of the vehicle to take effect and a hysteresis time t2 for a rear wheel unlocker RWU to take effect includes:

determining, based on a field test of the vehicle, the hysteresis time t1 for the CDP to take effect and the hysteresis time t2 for the RWU to take effect, specifically including:

recording a time from a moment at which the DBF is triggered to a moment at which power cylinder brake pressure P of the CDP reaches a pressure value P1 corresponding to a braking objective, and denoting the time as the hysteresis time t1; and
recording a time from a moment at which the DBF is triggered to a moment at which an electronic parking braking system EPB of the vehicle feeds back that a caliper of the vehicle starts clamping, and denoting the time as the hysteresis time t2.

The step of determining, based on a field test, the hysteresis time t1 for the CDP to take effect and the hysteresis time t2 for the RWU to take effect further includes:

separately recording hysteresis times t1' for the CDP to take effect and hysteresis times t2' for the RWU to take effect that respectively correspond to four vehicle speeds of the vehicle at 120 km/h, 90 km/h, 60 km/h, and 30 km/h; and
obtaining an average value of the hysteresis times t1' and the hysteresis times t2' that respectively correspond to the four vehicle speeds, to obtain the hysteresis time t1 for the CDP to take effect and the hysteresis time t2 for the RWU to take effect.

Control of a vehicle torque is lacked within the time for the controller deceleration parking CDP function of the electronic stability program ESP of the vehicle to take effect and the time for the rear wheel unlocker RWU function of the electronic parking braking system EPB to take effect. Consequently, driving performance and safety problems may occur. Therefore, torque control needs to be performed on the vehicle based on the vehicle torque change amount within the time. Therefore, the time for the CDP function to take effect and the time for the RWU function to take effect are separately measured, and whether the CDP function takes effect and whether the RWU function takes effect are respectively determined based on a power cylinder pressure build-up state of the vehicle corresponding to CDP and a caliper state of the vehicle corresponding to the RWU. After the DBF is triggered, the RWU acts only when CDP fails. Therefore, when the vehicle is in a normal state, the CDP function of the ESP may be shielded through calibration, or the like (a manner is not limited, provided that a function is realized), so that the controller deceleration parking function fails. Then, the hysteresis time before the RWU acts is determined.

It should be noted that, hysteresis times of CDP and the RWU in four vehicle speed states are separately measured, and an average value is calculated respectively. A selected vehicle speed state is merely used as an example. To improve precision of the hysteresis times corresponding to CDP and the RWU, a quantity of vehicle speed measurement times may be increased, a correlation between a vehicle speed and a corresponding hysteresis time may be calculated, and corresponding calibration is performed in the vehicle control unit, so that a corresponding hysteresis time parameter is selected based on a real-time vehicle speed when the vehicle torque change amount is calculated, to further improve a torque control effect of the vehicle, and improve driving performance and safety in a dynamic parking process.

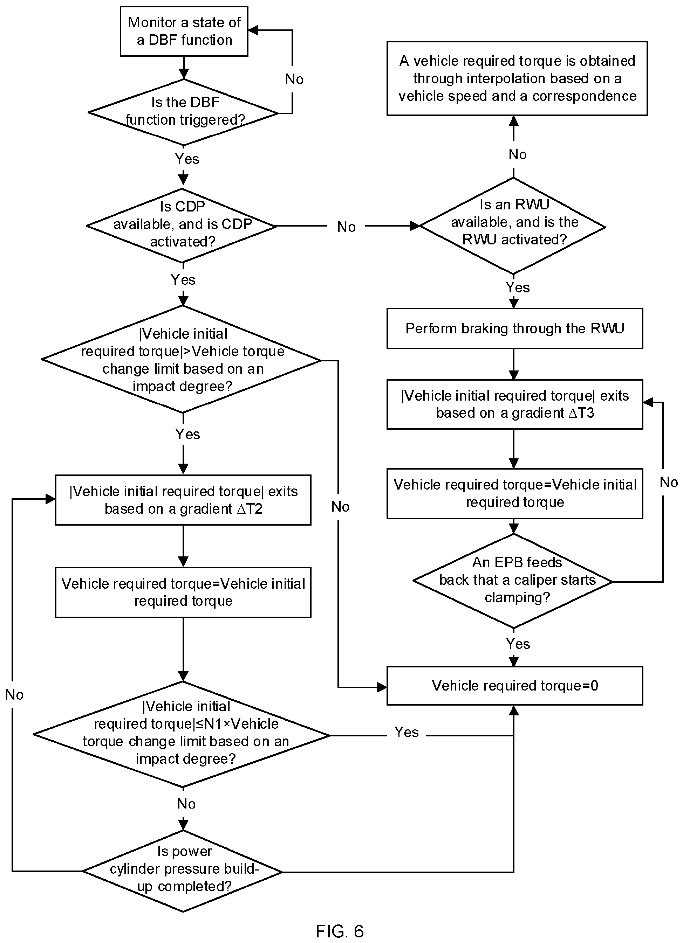

As shown in FIG. 6, in an embodiment, the step of monitoring a state of the CDP, and if the CDP is activated, processing the vehicle initial required torque T3 based on the vehicle torque change amount ΔT and the hysteresis time t1 for the CDP to take effect includes:

activating a CDP braking function when the DBF is triggered and the CDP is activated;
determining a first vehicle torque change amount

$$\Delta T1 = \frac{t1}{1000} \times \Delta T$$

based on the hysteresis time t1 and the vehicle torque change amount ΔT;
when the DBF is triggered, determining that the vehicle initial required torque is T3, and determining a magnitude relationship between |T3| and ΔT1 ; and
if |T3|≤ΔT1 , enabling a vehicle required torque of the vehicle=T3=0; and

if $|T3| > \Delta T1$, monitoring the power cylinder brake pressure P; enabling $|T3|=|T3|-\Delta T2$ when P<P1; and enabling the vehicle required torque=T3=0 when it is detected that P≥P1 or $|T3|<N1\times\Delta T1$, where $\Delta T2$ is an exit gradient of $|T3|$, N1 is an anti-jump coefficient of $|T3|$, and 0.5≤N1≤0.8.

In addition, the exit gradient $\Delta T2$ of $|T3|$ may be represented as follows:

$$\Delta T2 = \frac{|T3|\max}{t1} \times 1000.$$

Herein, $|T3|\max = \max(|T1|\max, T2\max)$, and t1 is a hysteresis time for the CDP to take effect.

In this embodiment, to facilitate posture control of the vehicle, after the DBF is activated, control of a vehicle body posture is better facilitated when no vehicle required torque intervenes, but if the required torque is directly reset, a problem such as vehicle lurching or a secondary nose dive is caused. One of points affected by the problems is "driver comfort". Therefore, the vehicle initial required torque is obtained through torque arbitration, and then a vehicle required torque change amount within a hysteresis time, namely, an upper limit $\Delta T1$ of a torque change amount that affects the driver comfort, is calculated based on the vehicle impact degree. If the vehicle required torque $|T3|$ of the vehicle is not greater than this value, it indicates that the passenger comfort is not affected even if $|T3|$ is directly reset. In this case, $|T3|$ is directly reset, and the required torque is not processed. Similarly, the vehicle torque change amount reflected by $\Delta T1$ is actually an upper limit for determining whether to process a current slip recovery torque or a current creep torque.

It should be noted that, an anti-jump coefficient N1 is added when a magnitude relationship between $|T3|$ and $\Delta T1$ is determined, which specifically means that a torque control function is triggered when $|T3|> \Delta T1$; the torque control function is not triggered if $|T3|$ is set to be not greater than $\Delta T1$; and if it is detected that a value of $|T3|$ jitters, the torque control function jumps between being triggered and not being triggered, affecting driving performance. Therefore, it is required that after the torque control function is triggered, the function can be disabled only after $|T3|<N1\times\Delta T1$, so that the vehicle control unit stably determines whether to perform torque control. Similarly, a value of N1 is usually between 0.5 and 0.8 based on experience.

As shown in FIG. 6, in an embodiment, the step of processing the vehicle initial required torque T3 based on the vehicle torque change amount $\Delta T$ and the hysteresis time t2 for the RWU to take effect, if the CDP is not activated but the RWU is activated includes:

activating the RWU braking function when the DBF is triggered and the CDP is not activated but the RWU is activated; and

enabling $|T3|=|T3|-\Delta T3$ within the hysteresis time t2 of the RWU braking function, and when the time t2 expires, enabling $|T3|=0$ if $|T3|>0$, where $\Delta T3$ is an exit gradient of $|T3|$.

In addition, the exit gradient $\Delta T3$ of $|T3|$ may be represented as follows:

$$\Delta T3 = \frac{N2\times|T3|\max}{t2} \times 1000.$$

Herein, N2 is a factor of safety of $|T3|$, 1.1≤N2≤1.3, $|T3|\max = \max(|T1|\max, T2\max)$, and t2 is the hysteresis time for the RWU to take effect.

In this embodiment, the RWU function is to implement dynamic parking through clamping by a caliper. When RWU takes effect, the vehicle required torque more needs to be in a reset state, so that the electronic stability program better controls the vehicle body posture. Therefore, a process in which torque control needs to be performed on the vehicle is limited to a hysteresis time from a moment at which the RWU is activated to a moment at which the caliper performs clamping, to prevent a torque control process from exerting impact when the RWU takes effect.

It should be noted that when the vehicle initial required torque is controlled to exit based on the gradient $\Delta T3$, the factor of safety N2 is introduced to ensure that the vehicle required torque can be reset in any vehicle condition. When the factor of safety N2 is not introduced, the exit gradient of the vehicle initial required torque is $\Delta T3 =|T3|\max/t2*1000$. A calculated value indicates a gradient that can be used to just reset the torque most rapidly. However, it is considered that when the RWU controls the vehicle body state, to maintain stability of the vehicle posture, it is not expected that the vehicle required torque intervenes. Therefore, the factor of safety N2 is added, to ensure that the vehicle required torque can be reset before the RWU starts clamping. Similarly, a value of N2 is between 1.1 and 1.3 based on experience.

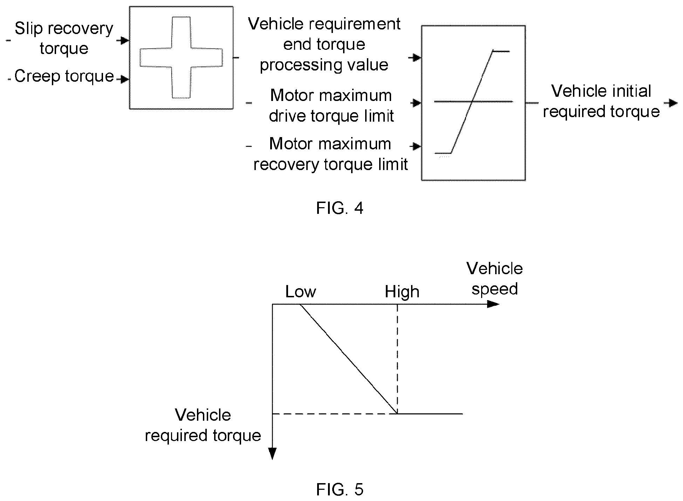

As shown in FIG. 5 and FIG. 6, in an embodiment, the step of processing the vehicle initial required torque T3 based on a vehicle speed V of the vehicle if neither the CDP nor the RWU is activated includes:

when the DBF is triggered and neither the CDP nor the RWU is activated, activating a pure electric braking module of the vehicle, and obtaining a current vehicle speed V of the vehicle; and

enabling T3=-$|T3|\max$ when V≥V1; or

enabling T3=V$\times$A+B when V2≤V≤V1, where A and B are calibratable constants; or

enabling T3=0 when V≤V2.

V1 and V2 are calibratable speed values, and V1>V2.

In this embodiment, as shown in FIG. 5, in a vehicle speed on a horizontal axis, "low" may correspond to V2, and "high" may correspond to V1, which is used for calculation. A value of the vehicle required torque is related to the vehicle speed V. When V is higher than V1, the vehicle maintains a value of a maximum slip recovery capability. That is, T3=-|T3|max. When the vehicle is decelerated to a value less than V1 and greater than V2, T3 and the vehicle speed have a linear relationship (which may be calibrated). When the vehicle speed is reduced to a value less than V2, T3 is reset, to implement parking.

In one of the following embodiments:
The current vehicle speed of the vehicle is 70 km/h. The driver finds an emergency ahead, releases an accelerator pedal, and intends to brake through the brake pedal. The driver finds that the brake pedal is invalid, and therefore, emergently uses EPB to perform dynamic parking. A torque control policy in this process is as follows:

**[1]** Processing of the slip recovery torque: As shown in FIG. 1, the slip recovery function is enabled. In a state in which "D" (drive gear) is engaged, the vehicle speed is 70 km/h, the accelerator pedal is not pressed down, and the energy recovery mode is strong recovery, after an input slip recovery torque is processed, it is learned that the vehicle requested slip recovery torque is T1=-1200 N·m.

**[2]** Processing of the creep torque: As shown in FIG. 2, the creep function is enabled. In a state in which "D" (drive gear) is engaged, the vehicle speed is 70 km/h, and the brake pedal is not pressed down, after an input creep torque is processed, it is learned that the vehicle requested creep torque is T2=0 N·m.

**[3]** Torque arbitration: As shown in FIG. 3, the slip recovery torque and the creep torque are summed, to learn that a vehicle required torque is T3=T1+T2=-1200+0=-1200 N·m. An absolute value of the vehicle required torque is less than Tmax (Tmax=1500 N·m), and it is learned through arbitration that the vehicle initial required torque is T3=-1200 N·m.

**[4]** Calculation of the vehicle torque change amount based on the impact degree: In this embodiment, the rotating mass conversion factor of the vehicle is δ=1.05, the mass is m=2000 kg, the wheel rolling radius is r=0.325 m, the powertrain system speed ratio is i=11.137, and the powertrain system transmission efficiency is η=0.98. Through driving performance evaluation and a related standard, it is learned that the vehicle impact degree is j=10 m/s³ and an interval time is equal to 1s. Therefore, it is learned that a corresponding vehicle torque change amount is equal to 625.3 N·m when an impact degree per unit time is 10 m/s³.

**[5]** Measurement of the hysteresis times of the CDP function and the RWU function: Through a field test, the hysteresis time of CDP from a moment at which the DBF is activated to a moment at which the power cylinder brake pressure P is not less than P1 (P1=40 bar) is t1=500 ms, and a hysteresis time of the RWU from a moment at which the DBF is triggered to a moment at which the EPB feeds back that the caliper starts clamping is t2=700 ms.

[6] Processing of the vehicle initial required torque during CDP braking:

**1.** If it is detected in this case that the DBF is triggered, when a CDP availability state is "available", and the CDP braking function is activated, a CDP braking module is entered.
**2.** Within the CDP pressure build-up hysteresis time t1, when the impact degree is 10 m/s³, the vehicle torque change amount is ΔT1=t1/1000×ΔT=500/1000×625.3=312.7 N·m.
**3.** When the DBF function is triggered, the vehicle required torque is T3=-1200 N·m, and |T3| is compared with ΔT1.
**4.** It is easily learned that |T3|>ΔT1. The power cylinder brake pressure P is monitored within the CDP pressure build-up hysteresis time t1. When P<40 bar, |T3| is enabled to be reduced based on the preset gradient ΔT2. When it is detected that P≥40 bar or |T3|≤N1×ΔT1=0.7×312.7=218.9 N·m, superposition of the vehicle required torque is terminated, and the vehicle required torque T3 is reset.
**5.** ΔT2 determining method: ΔT2=Tmax/t1×1000=1500/500×1000=3000 N·m/s. To be specific, before a torque reset condition is reached, the vehicle required torque |T3| is reduced based on a gradient of 3000 N·m/s.

[7] Processing of the vehicle required torque during RWU braking:

1. When it is detected in this case that the DBF is triggered, a CDP availability state is "unavailable", an RWU availability state is "available", and an RWU braking function is activated, an RWU braking module is entered.
**2.** Within the hysteresis time t2 of the RWU function, the vehicle initial required torque is T3=-1200 N·m, and exits based on the gradient ΔT3. If |T3| is not equal to 0 when the EPB feeds back that the caliper starts clamping, set T3=0 N·m.
**3.** ΔT3 determining method: If the factor of safety N2=1.1 is selected, the exit gradient of the vehicle initial required torque is

$\Delta T3 = N2 \times Tmax/t2 \times 1000 = 1.1 \times 1500/700 \times 1000 = 2357$ N·m/s.

[8] Processing of the vehicle required torque when both CDP and the RWU are unavailable:

If it is detected in this case that the DBF is triggered, the CDP availability state is "unavailable", and the RWU availability state is "unavailable". If the current vehicle speed is V=70 km/h, and is higher than V1=60 km/h, set T3=-Tmax=-1500 N·m, and such a case is maintained. After the vehicle speed is reduced to V1, the vehicle required torque T3 is obtained through interpolation in FIG. 4. After the vehicle speed is reduced to a value less than V2=2 km/h, T3 is reset, to implement parking.

In another one of the following embodiments: The current vehicle speed of the vehicle is 5 km/h, and the vehicle is in a creeping state. In this case, the driver cannot move a leg suddenly, and therefore, emergently uses EPB to perform dynamic parking. A torque control policy in this process is as follows:

[1] Processing of the slip recovery torque: As shown in FIG. 1, the slip recovery function is enabled. In a state in which "R" (reverse gear) is engaged, the vehicle speed is 5 km/h, the accelerator pedal is not pressed down, and the energy recovery mode is strong recovery, after an input slip recovery torque is processed, it is learned that the vehicle requested slip recovery torque is T1=0 N·m.

[2] Processing of the creep torque: As shown in FIG. 2, the creep function is enabled. In a state in which "R" (reverse gear) is engaged, the vehicle speed is 5 km/h, and the brake pedal is not pressed down, after an input creep torque is processed, it is learned that the vehicle requested creep torque is T2=700 N·m.

[3] Torque arbitration: As shown in FIG. 3, the slip recovery torque and the creep torque are summed, to learn that a vehicle required torque is T3=T1+T2=0+700=700 N·m. An absolute value of the vehicle required torque is less than Tmax (Tmax=1500 N·m), and it is learned through arbitration that the vehicle initial required torque is T3=700 N·m.

[4] Calculation of the vehicle torque change amount based on the impact degree: In this embodiment, the rotating mass conversion factor of the vehicle is $\delta$=1.05, the mass is m=2000 kg, the wheel rolling radius is r=0.325 m, the powertrain system speed ratio is i=11.137, and the powertrain system transmission efficiency is $\eta$=0.98. Through driving performance evaluation and a related standard, it is learned that the vehicle impact degree is j=10 m/s$^3$ and an interval time is equal to 1s. Therefore, it is learned that a corresponding vehicle torque change amount is equal to 625.3 N·m when an impact degree per unit time is 10 m/s$^3$.

[5] Measurement of the hysteresis times of the CDP function and the RWU function: Through a field test, the hysteresis time of CDP from a moment at which the DBF is activated to a moment at which the power cylinder brake pressure P is not less than P1 (P1=40 bar) is t1=500 ms, and a hysteresis time of the RWU from a moment at which the DBF is triggered to a moment at which the EPB feeds back that the caliper starts clamping is t2=700 ms.

[6] Processing of the vehicle initial required torque during CDP braking:

1. If it is detected in this case that the DBF is triggered, when a CDP availability state is "available", and the CDP braking function is activated, a CDP braking module is entered.

2. Within the CDP pressure build-up hysteresis time t1, when the impact degree is 10 m/s$^3$, the vehicle torque change amount is $\Delta T1 = t1/1000 \times \Delta T = 500/1000 \times 625.3 = 312.7$ N·m.

3. When the DBF function is triggered, the vehicle required torque is T3=700 N·m, and |T3| is compared with $\Delta T1$.

4. It is easily learned that |T3|>$\Delta T1$. The power cylinder brake pressure P is monitored. When P<40 bar, the vehicle required torque T3 needs to be superposed, and |T3| is enabled to be reduced based on the preset gradient $\Delta T2$. When it is detected that P≥40 bar or |T3|≤N1×$\Delta T1$=0.7×312.7=218.9 N·m, superposition of the vehicle required torque is terminated, and the required torque T3 is reset.

5. $\Delta T2$ determining method: $\Delta T2 = Tmax/t1 \times 1000 = 1500/500 \times 1000 = 3000$ N·m/s. To be specific, before a torque reset condition is reached, the vehicle required torque |T3| is reduced based on a gradient of 3000 N·m/s.

[7] Processing of the vehicle required torque during RWU braking:

1. When it is detected in this case that the DBF is triggered, a CDP availability state is "unavailable", an RWU availability state is "available", and an RWU braking function is activated, an RWU braking module is entered.

2. Within the hysteresis time t2 of the RWU function, the vehicle initial required torque is T3=800 N·m, and exits based on the gradient $\Delta T3$. If |T3| is not equal to 0 when the EPB feeds back that the caliper starts clamping, let T3=0 N·m.

3. $\Delta T3$ determining method: If the factor of safety N2=1.1 is selected, the exit gradient of the vehicle initial required torque is $\Delta T3 = N2 \times Tmax/$

t2×1000=1.1×1500/700×1000=2357 N·m/s.

[8] Processing of the vehicle required torque when both CDP and the RWU are unavailable:
If it is detected in this case that the DBF is triggered, the CDP availability state is "unavailable", and the RWU availability state is "unavailable". If the current vehicle speed is V=5 km/h, and is higher than V2. The vehicle required torque T3 is obtained through interpolation in FIG. 4. After the vehicle speed is reduced to a value less than V2=2 km/h, T3 is reset, parking is achieved.

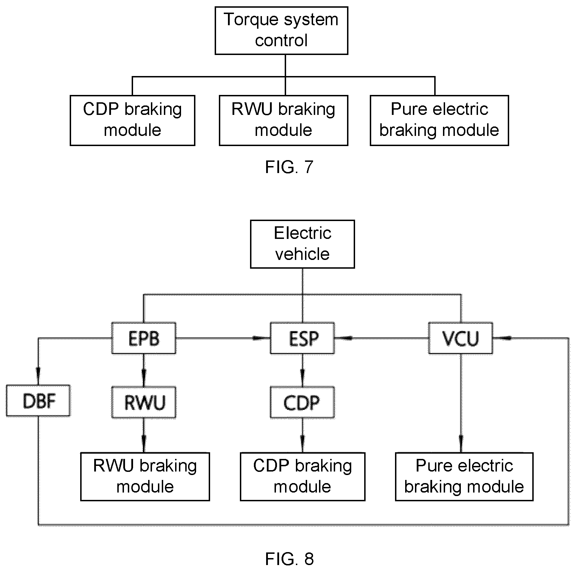

**As** shown in FIG. 7, the present invention further provides a dynamic parking torque control system. The control system performs the foregoing dynamic parking torque control method, the control system includes a CDP braking module, an RWU braking module, and a pure electric braking module, and when it is detected that a dynamic braking function DBF is triggered, an availability state of the CDP braking module and an availability state of the RWU braking module are sequentially read, and when the CDP braking module or the RWU braking module is available, the CDP braking module or the RWU braking module is activated to enter a CDP braking state or an RWU braking state, or when both the CDP braking module and the RWU braking module are unavailable, the pure electric braking module is activated to enter a pure electric braking state.

The dynamic parking torque control system is installed in a vehicle control unit of a vehicle to perform the dynamic parking torque control method, and whether a controller deceleration parking function of an electronic stability program of the vehicle and a rear wheel unlocker function of an electronic parking braking system are in an available state is separately determined, to select a specific torque control method to be used in a dynamic parking process. Similarly, when the controller deceleration parking function of the electronic stability program and the rear wheel unlocker function fail, a slip recovery torque used when a drive motor in a pure electric braking module of the vehicle performs energy recovery may alternatively be selected as a torque control object in the dynamic parking process, to perfect a dynamic parking function of the vehicle, and maintaining driving performance and safety of dynamic parking.

As shown in FIG. 8, the present invention further provides an electric vehicle, including a dynamic parking torque control system, an electronic parking braking system EPB, an electronic stability program ESP, and a vehicle control unit VCU. The VCU reads a signal of a slip recovery torque and a signal of a creep torque of the electric vehicle, to perform vehicle initial required torque arbitration to obtain a vehicle initial required torque, and the VCU monitors a triggering state of a dynamic braking function DBF of the EPB, and activates controller deceleration parking CDP of the ESP or rear wheel unlocker RWU of the EPB, so that the CDP or the RWU controls a vehicle required torque of the electric vehicle based on the vehicle initial required torque by using the dynamic parking torque control system. The electric vehicle further includes a pure electric braking module, and when both the CDP and the RWU are unavailable, the pure electric braking module is activated, and the vehicle required torque is controlled based on a vehicle speed of the electric vehicle by using the dynamic parking torque control system.

The electric vehicle processes various input parameters by using the vehicle control unit, including parameters of the vehicle such as a slip recovery function enable flag bit, a slip recovery required torque, a creep function enable flag bit, a creep required torque, a DBF activation flag bit, a CDP function activation flag bit, a CDP availability state, power cylinder brake pressure, a power cylinder pressure build-up hysteresis time, an RWU brake activation flag bit, an RWU availability state, an EPB caliper state, an RWU function hysteresis time, a vehicle rotating mass conversion factor, vehicle mass, a wheel rolling radius, a powertrain system speed ratio, powertrain system transmission efficiency, a vehicle impact degree, and a vehicle speed; and outputs, in combination with a dynamic parking torque control method, a vehicle required torque obtained through processing. In addition, the vehicle control unit selects, based on the controller deceleration parking function of the electronic stability program of the vehicle, the rear wheel unlocker function, and a slip recovery torque of the pure electric braking module of the vehicle, a dynamic parking policy to match different working conditions of the vehicle, to maintain driving performance and safety of the vehicle in a dynamic parking process.

Finally, the present invention further provides a computer-readable storage medium. The computer-readable storage medium stores computer-readable instructions, and when the computer-readable instructions are executed by a processor of a computer, the computer is enabled to perform the foregoing dynamic parking torque control method, so that dynamic parking of an electric vehicle can be implemented while driving performance and safety are maintained.

In conclusion, according to the dynamic parking torque control method and system, the electric vehicle, and the storage medium that are provided in the embodiments of the present invention, a requirement end torque is controlled in a dynamic parking process to adjust a torque output of a powertrain, so as to improve dynamic parking driving performance and improve safety in a braking process. In addition, different torque control policies are separately used based on whether a controller deceleration parking CDP function of an electronic stability program ESP of a vehicle and a rear wheel unlocker RWU function of an electronic parking braking system EPB of the vehicle are available, to improve driving performance and safety in the dynamic parking process.

The foregoing embodiments merely illustrate principles and effects of the present invention, but are not intended to limit the present invention. Any person skilled in the art may modify or alter the foregoing embodiments without departing from the scope of the present invention. Therefore, all equivalent modifications or alterations completed by a person of ordinary skill in the art without departing from the technical ideas disclosed in the present invention should still be covered by the claims of the present invention.

**Claims**

1. A dynamic parking torque control method, comprising:

    monitoring a triggering state of a dynamic braking function DBF of a vehicle, and performing vehicle initial required torque arbitration after the DBF is triggered, to obtain a vehicle initial required torque T3;
    obtaining and calculating a vehicle torque change amount ΔT based on a vehicle impact degree of the vehicle;
    obtaining a hysteresis time t1 for controller deceleration parking CDP of the vehicle to take effect and a hysteresis time t2 for a rear wheel unlocker RWU to take effect;
    monitoring a state of the CDP, and processing the vehicle initial required torque T3 based on the vehicle torque change amount ΔT and the hysteresis time t1 for the CDP to take effect if the CDP is activated;
    processing the vehicle initial required torque T3 based on the vehicle torque change amount ΔT and the hysteresis time t2 for the RWU to take effect if the CDP is not activated but the RWU is activated; and
    processing the vehicle initial required torque T3 based on a vehicle speed V of the vehicle if neither the CDP nor the RWU is activated.

2. The control method according to claim 1, wherein monitoring the triggering state of the dynamic braking function DBF of the vehicle, and performing vehicle initial required torque arbitration after the DBF is triggered, to obtain the vehicle initial required torque T3 comprises:

    receiving and processing only a signal of a slip recovery torque T1 and a signal of a creep torque T2 of the vehicle after the DBF is triggered;
    defining that the slip recovery torque T1 and a braking torque of the vehicle are negative values, enabling T1=T1 when T1<0, enabling T1=-T1 when T1>0, and enabling the slip recovery torque T1=0 when a slip recovery function of the vehicle is not on;

defining that the creep torque is a positive value, enabling T2=|T2|, and enabling the creep torque T2=0 when a creep function is not on; and
determining the vehicle initial required torque T3 based on the slip recovery torque T1 and the creep torque T2, and enabling T3=T1+T2 and 0≤|T3|≤max(|T1|max, T2max).

3. The control method according to claim 2, wherein after determining the vehicle initial required torque T3 based on the slip recovery torque T1 and the creep torque T2, and enabling T3=T1+T2 and 0≤|T3|≤max(|T1|max, T2max), the method further comprises:
comparing an absolute value of the vehicle initial required torque T3 with a motor output torque limit T4 of the vehicle, and enabling T3=min(|T3|, T4).

4. The control method according to claim 3, wherein the motor output torque limit comprises a motor maximum drive torque limit and a motor maximum recovery torque limit.

5. The control method according to claim 1, wherein when obtaining and calculating the vehicle torque change amount ΔT based on the vehicle impact degree of the vehicle, a calculation formula of the vehicle torque change amount ΔT is as follows:

$$\Delta T = \frac{\delta \cdot m \cdot r}{i \cdot \eta} \cdot \left| j \right| \cdot \Delta t$$

, wherein
δ is a rotating mass conversion factor of the vehicle; m is vehicle mass in a unit of kg; r is a wheel rolling radius in a unit of m; i is a powertrain system speed ratio; η is powertrain system transmission efficiency; j is the vehicle impact degree in a unit of m/s$^3$; Δt is a time interval in a unit of s; and ΔT is a corresponding vehicle torque change amount within a time of Δt when the vehicle impact degree is j.

6. The control method according to claim 5, wherein the vehicle impact degree j is represented as follows:

$$J = \frac{d\alpha}{dt} = \frac{d^2 v}{dt^2}$$

, wherein
$\dfrac{d\alpha}{dt}$ is a first-order derivative of acceleration of the vehicle, and $\dfrac{d^2 v}{dt^2}$ is a second-order derivative of a longitudinal velocity of the vehicle.

7. The control method according to claim 1, wherein obtaining the hysteresis time t1 for controller deceleration parking CDP of the vehicle to take effect and the hysteresis time t2 for the rear wheel unlocker RWU to take effect comprises:
determining, based on a field test of the vehicle, the hysteresis time t1 for the CDP to take effect and the hysteresis time t2 for the RWU to take effect, specifically comprising:

recording a time from a moment at which the DBF is triggered to a moment at which power cylinder brake pressure P of the CDP reaches a pressure value P1 corresponding to a braking objective, and denoting the time as the hysteresis time t1; and
recording a time from a moment at which the DBF is triggered to a moment at which an electronic parking braking system EPB of the vehicle feeds back that a caliper of the vehicle starts clamping, and denoting the time as the hysteresis time t2.

8. The control method according to claim 7, wherein determining, based on the field test, the hysteresis time t1 for the CDP to take effect and the hysteresis time t2 for the RWU to take effect further comprises:

separately recording hysteresis times t1' for the CDP to take effect and hysteresis times t2' for the RWU to take effect that respectively correspond to four vehicle speeds of the vehicle at 120 km/h, 90 km/h, 60 km/h, and 30 km/h; and obtaining an average value of the hysteresis times t1' and an average value of the hysteresis times t2' that respectively correspond to the four vehicle speeds, to obtain the hysteresis time t1 for the CDP to take effect and the hysteresis time t2 for the RWU to take effect.

9. The control method according to claim 8, wherein monitoring the state of the CDP, and processing the vehicle initial required torque T3 based on the vehicle torque change amount $\Delta T$ and the hysteresis time t1 for the CDP to take effect if the CDP is activated comprises:

activating the CDP braking function when the DBF is triggered and the CDP is activated;
determining a first vehicle torque change amount $\Delta T1 = \dfrac{t1}{1000} \times \Delta T$ based on the hysteresis time t1 and the vehicle torque change amount $\Delta T$;
when the DBF is triggered, determining that the vehicle initial required torque is T3, and determining a magnitude relationship between |T3|

and $\Delta T1$; and
if |T3|≤$\Delta T1$, enabling a vehicle required torque of the vehicle=T3=0; and
if |T3|> $\Delta T1$, monitoring the power cylinder brake pressure P; enabling |T3|=|T3|-$\Delta T2$ when P<P1; and enabling the vehicle required torque=T3=0 when it is detected that P≥P1 or |T3|<N1x $\Delta T1$, wherein $\Delta T2$ is an exit gradient of |T3|, N1 is an anti-jump coefficient of |T3|, and 0.5≤N1≤0.8.

10. The control method according to claim 9, wherein the exit gradient $\Delta T2$ of |T3| is represented as follows:

$$\Delta T2 = \frac{|T3|max}{t1} \times 1000$$

, wherein
|T3|max = max(|T1|max, T2max) , and t1 is the hysteresis time for the CDP to take effect.

11. The control method according to claim 8, wherein processing the vehicle initial required torque T3 based on the vehicle torque change amount $\Delta T$ and the hysteresis time t2 for the RWU to take effect if the CDP is not activated but the RWU is activated comprises:

activating the RWU braking function when the DBF is triggered and the CDP is not activated but the RWU is activated; and
enabling |T3|=|T3|- $\Delta T3$ within the hysteresis time t2 of the RWU braking function, and when the time t2 expires, enabling |T3|=0 if |T3|>0, wherein $\Delta T3$ is an exit gradient of |T3|.

12. The control method according to claim 11, wherein the exit gradient $\Delta T3$ of |T3| is represented as follows:

$$\Delta T3 = \frac{N2 \times |T3|max}{t2} \times 1000$$

, wherein
N2 is a factor of safety of |T3|, 1.1≤N2≤1.3, |T3|max = max(|T1|max, T2max), and t2 is the hysteresis time for the RWU to take effect.

13. The control method according to claim 8, wherein processing the vehicle initial required torque T3 based on the vehicle speed V of the vehicle if neither the CDP nor the RWU is activated comprises:

when the DBF is triggered and neither the CDP nor the RWU is activated, activating a pure electric braking module of the vehicle, and obtaining a current vehicle speed V of the vehicle;

$$enabling\ T3=-|T3|max$$

when V≥V1;

$$enabling\ T3=V×A+B$$

when V2≤V≤V1, wherein A and B are calibratable constants; and

$$enabling\ T3=0$$

when V≤V2; wherein
V1 and V2 are calibratable speed values, and V1>V2.

14. A dynamic parking torque control system, wherein the control system performs the dynamic parking torque control method according to any one of claims 1 to 13, the control system comprises a CDP braking module, an RWU braking module, and a pure electric braking module, and when it is detected that the dynamic braking function DBF is triggered, an availability state of the CDP braking module and an availability state of the RWU braking module are sequentially read, and when the CDP braking module or the RWU braking module is available, the CDP braking module or the RWU braking module is activated to enter a CDP braking state or an RWU braking state, and the pure electric braking module is activated to enter a pure electric braking state when both the CDP braking module and the RWU braking module are unavailable.

15. An electric vehicle, comprising a dynamic parking torque control system, an electronic parking braking system EPB, an electronic stability program ESP, and a vehicle control unit VCU, wherein the VCU reads a signal of a slip recovery torque and a signal of a creep torque of the electric vehicle, to perform vehicle initial required torque arbitration to obtain the vehicle initial required torque, and the VCU monitors a triggering state of a dynamic braking function DBF of the EPB, and activates controller deceleration parking CDP of the ESP or a rear wheel unlocker RWU of the EPB, so that the CDP or the RWU controls a vehicle required torque of the electric vehicle based on the vehicle initial required torque by using the dynamic parking torque control system.

16. The electric vehicle according to claim 15, wherein the electric vehicle further comprises a pure electric braking module, and when both the CDP and the RWU are unavailable, the pure electric braking module is activated, and the vehicle required torque is controlled based on a vehicle speed of the electric vehicle by using the dynamic parking torque control system.

17. A computer-readable storage medium, wherein the computer-readable storage medium stores computer-readable instructions, and when the computer-readable instructions are executed by a processor of a computer, the computer is enabled to perform the dynamic parking torque control method according to any one of claims 1 to 13.

Monitor a triggering state of a dynamic braking function DBF of a vehicle, and perform vehicle initial required torque arbitration after the DBF is triggered, to obtain a vehicle initial required torque T3

Obtain and calculate a vehicle torque change amount ΔT based on a vehicle impact degree of the vehicle

Obtain a hysteresis time t1 for controller deceleration parking CDP of the vehicle to take effect and a hysteresis time t2 for a rear wheel unlocker RWU to take effect

Monitor a state of the CDP, and if the CDP is activated, process the vehicle initial required torque T3 based on the vehicle torque change amount and the hysteresis time t1 for the CDP to take effect

Process the vehicle initial required torque T3 based on the vehicle torque change amount and the hysteresis time t2 for the RWU to take effect, if the CDP is not activated but the RWU is activated

Process the vehicle initial required torque T3 based on a vehicle speed V of the vehicle if neither the CDP nor the RWU is activated

FIG. 1

Initial slip recovery torque

Is a slip recovery function enabled? —— No —→ Slip recovery torque=0

Yes

Slip recovery torque=−|Initial slip recovery torque|

FIG. 2

Initial creep torque

Is a creep function enabled? —— No —→ Creep torque=0

Yes

Creep torque=|Initial creep torque|

FIG. 3

Slip recovery
torque

Creep torque

Vehicle requirement
end torque
processing value

Motor maximum
drive torque limit

Motor maximum
recovery torque limit

Vehicle initial
required torque

FIG. 4

Vehicle
speed

Low    High

Vehicle
required torque

FIG. 5

Monitor a state of a DBF function

Is the DBF function triggered? — No

Yes

Is CDP available, and is CDP activated? — No → Is an RWU available, and is the RWU activated? — No → A vehicle required torque is obtained through interpolation based on a vehicle speed and a correspondence

Yes

|Vehicle initial required torque|>Vehicle torque change limit based on an impact degree? — No

Yes

|Vehicle initial required torque| exits based on a gradient △T2

Vehicle required torque=Vehicle initial required torque

|Vehicle initial required torque|≤N1×Vehicle torque change limit based on an impact degree? — Yes

No

Is power cylinder pressure build-up completed? — No

Yes (RWU branch)

Perform braking through the RWU

|Vehicle initial required torque| exits based on a gradient △T3

Vehicle required torque=Vehicle initial required torque

An EPB feeds back that a caliper starts clamping? — No

Yes

Vehicle required torque=0

FIG. 6

Torque system control

CDP braking module

RWU braking module

Pure electric braking module

FIG. 7

Electric vehicle

EPB

ESP

VCU

DBF

RWU

CDP

RWU braking module

CDP braking module

Pure electric braking module

FIG. 8

## INTERNATIONAL SEARCH REPORT

| International application No. |
|---|
| **PCT/CN2023/120974** |

**A. CLASSIFICATION OF SUBJECT MATTER**

B60L 7/10(2006.01)i; B60L 15/20(2006.01)i; B60T 7/12(2006.01)n

According to International Patent Classification (IPC) or to both national classification and IPC

**B. FIELDS SEARCHED**

Minimum documentation searched (classification system followed by classification symbols)

IPC:B60L7/-; B60L15/-; B60T7/-

Documentation searched other than minimum documentation to the extent that such documents are included in the fields searched

Electronic data base consulted during the international search (name of data base and, where practicable, search terms used)

CNABS, CNTXT, CNKI, VEN, USTXT: 深蓝汽车, 乔帅鹏, 黄亮, 杨官龙, 朱雨桃, 严钦山, 动态驻车, 行车制动, 滑行扭矩, 能量回收, 蠕行扭矩, 仲裁, 电子驻车, 减速控制, 后轮防抱死, 冲击, 迟滞时间, DBF, slid+, energy, recover+, recycl+, creep +, torque, arbit+, EPB, Electrical Parking Brake, CDP, Controller Deceleration Parking, RWU, Rear Wheel Unlock, impact, delay time

**C. DOCUMENTS CONSIDERED TO BE RELEVANT**

| Category* | Citation of document, with indication, where appropriate, of the relevant passages | Relevant to claim No. |
|---|---|---|
| PX | CN 116278809 A (DEEPAL AUTOMOBILE TECHNOLOGY CO., LTD.) 23 June 2023 (2023-06-23)<br>claims, description, paragraphs 0092-0207, and figures 1-8 | 1-17 |
| Y | CN 107487309 A (BORGWARD AUTOMOTIVE (CHINA) CO., LTD.) 19 December 2017 (2017-12-19)<br>description, paragraphs 0040-0112, and figures 1-6E | 15-16 |
| Y | CN 109131305 A (HYUNDAI MOTOR COMPANY et al.) 04 January 2019 (2019-01-04)<br>description, paragraphs 0039-0197, and figures 1-3 | 15-16 |
| A | CN 107487309 A (BORGWARD AUTOMOTIVE (CHINA) CO., LTD.) 19 December 2017 (2017-12-19)<br>description, paragraphs 0040-0112, and figures 1-6E | 1-14, 17 |
| A | CN 109131305 A (HYUNDAI MOTOR COMPANY et al.) 04 January 2019 (2019-01-04)<br>description, paragraphs 0039-0197, and figures 1-3 | 1-14, 17 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **09 November 2023** | **15 November 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

### C.    DOCUMENTS CONSIDERED TO BE RELEVANT

| Category* | Citation of document, with indication, where appropriate, of the relevant passages | Relevant to claim No. |
|---|---|---|
| A | CN 110525419 A (HYUNDAI MOTOR COMPANY et al.) 03 December 2019 (2019-12-03)<br>entire document | 1-17 |
| A | CN 111645683 A (CHONGQING CHANGAN AUTOMOBILE CO., LTD.) 11 September 2020 (2020-09-11)<br>entire document | 1-17 |
| A | CN 114312689 A (ROBERT BOSCH GMBH) 12 April 2022 (2022-04-12)<br>entire document | 1-17 |
| A | CN 112744195 A (ROBERT BOSCH GMBH) 04 May 2021 (2021-05-04)<br>entire document | 1-17 |
| A | DE 102016207284 A1 (ROBERT BOSCH GMBH) 02 November 2017 (2017-11-02)<br>entire document | 1-17 |

Form PCT/ISA/210 (second sheet) (July 2022)

**INTERNATIONAL SEARCH REPORT**
Information on patent family members

International application No.

**PCT/CN2023/120974**

| Patent document cited in search report | | | Publication date (day/month/year) | Patent family member(s) | | | Publication date (day/month/year) |
|---|---|---|---|---|---|---|---|
| CN | 116278809 | A | 23 June 2023 | None | | | |
| CN | 107487309 | A | 19 December 2017 | None | | | |
| CN | 109131305 | A | 04 January 2019 | KR | 20190001704 | A | 07 January 2019 |
| | | | | KR | 102274125 | B1 | 06 July 2021 |
| | | | | US | 2019001984 | A1 | 03 January 2019 |
| | | | | US | 10442434 | B2 | 15 October 2019 |
| | | | | CN | 109131305 | B | 28 April 2023 |
| CN | 110525419 | A | 03 December 2019 | KR | 20190133484 | A | 03 December 2019 |
| | | | | KR | 102518656 | B1 | 06 April 2023 |
| | | | | US | 2019359213 | A1 | 28 November 2019 |
| | | | | US | 11208106 | B2 | 28 December 2021 |
| CN | 111645683 | A | 11 September 2020 | None | | | |
| CN | 114312689 | A | 12 April 2022 | None | | | |
| CN | 112744195 | A | 04 May 2021 | EP | 3816000 | A1 | 05 May 2021 |
| | | | | EP | 3816000 | B1 | 01 March 2023 |
| | | | | US | 2021129811 | A1 | 06 May 2021 |
| | | | | US | 11731597 | B2 | 22 August 2023 |
| DE | 102016207284 | A1 | 02 November 2017 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111645683 A
- CN 114802169 A